# EUROPÄISCHE PATENTSCHRIFT

(11) **EP 2 776 266 B1**
(45) Veröffentlichungstag und Bekanntmachung des Hinweises auf die Patenterteilung: **15.07.2015**
(21) Anmeldenummer: 12790470.4
(22) Anmeldetag: 08.11.2012
(51) Int. Cl.: G05G 1/08, G05G 5/06, G06F 3/0362, B60K 37/06, G05G 5/03, G05G 9/047, G06F 3/01, H01H 5/02, H01H 25/00, H01H 25/04, H01H 3/50

(54) **FAHRZEUG-STEUERUNGSVORRICHTUNG ZUM HANDBETÄTIGTEN STEUERN VON FAHRZEUGEINRICHTUNGEN**
VEHICLE CONTROL DEVICE FOR THE MANUAL CONTROL OF VEHICLE DEVICES
DISPOSITIF DE COMMANDE DE VÉHICULE POUR LA COMMANDE MANUELLE D'INSTALLATIONS DE VÉHICULE

(30) Priorität: 11.11.2011 DE 102011055302; 01.03.2012 DE 102012101697
(43) Veröffentlichungstag der Anmeldung: 17.09.2014
(73) Patentinhaber: GRAMMER AG, 92224 Amberg (DE)
(72) Erfinder: VLOEMANS, Eric, B-2250 Olen (BE); DECKERS, Goedele, B-8800 Roeselare (BE)
(74) Vertreter: Hannke, Christian
(86) Internationale Anmeldenummer: PCT/EP2012/072166
(87) Internationale Veröffentlichungsnummer: WO 2013/068482

(56) Entgegenhaltungen:
- EP-A2- 2 161 643
- DE-B3- 10 353 181
- DE-U1- 8 910 606
- US-A1- 2009 278 638

## Beschreibung

Die Erfindung betrifft eine Fahrzeug-Steuerungsvorrichtung zum handbetätigten Steuern bzw. Bedienen von Fahrzeugeinrichtungen mit mindestens einem Drehknopf und mindestens einem mit dem Drehknopf verbundenen Zahnrad, welches an einer mit dem Drehknopf gemeinsamen Drehachse drehbar gelagert ist, gemäß dem Oberbegriff des Patentanspruches 1.

Steuerungsvorrichtungen zum handbetätigten Steuern von Fahrzeugeinrichtungen sind hinreichend bekannt. Derartige Steuerungsvorrichtungen werden häufig im Mittelkonsolenbereich bei Pkws angeordnet, um beispielsweise das Navigationssystem oder das Radio zu bedienen. Herkömmlicherweise weisen derartige Steuerungsvorrichtungen eine Vielzahl von Knöpfen auf, die betätigt werden können, um die gewünschte Funktion, die zu steuern ist, herbeizuführen.

Derartige Steuerungsvorrichtungen können auch einen zentral angeordneten Knopf aufweisen, der sich sowohl nach links als auch nach rechts sowie nach vorne und nach hinten schwenken lässt und ebenso drehbar um eine sich im Wesentlichen vertikal verlaufende Achse ausgebildet ist. Die im Wesentlichen vertikal verlaufende Achse würde von der Schwenkbewegung ebenso leicht geschwenkt werden. Durch eine derartige Schwenkbewegung und/oder eine Drehbewegung des Knopfes können unterschiedliche Funktionen, die zu steuern sind, beispielsweise auf einem Display des Fahrzeuges aufgerufen werden und entsprechend bedient werden.

Derartige Steuerungsvorrichtungen mit einem drehbaren und/oder schwenkbaren Knopf bzw. Drehknopf sind unterhalb des Drehknopfes herkömmlicherweise mit einer Mechanik ausgestattet, die sich üblicherweise aus einem oder mehreren zahnradähnlichen Elementen und einer oder mehreren damit zusammenwirkenden Federn, auch Blattfedern, zusammensetzen. Wird nun zum Beispiel ein Drehknopf, der mit einem derartigen Zahnrad, dessen Zähne gerundete Außenflächen aufweisen, gedreht, so findet jeweils ein Auslenken der Blattfeder, die gegen die Außenfläche des Rades wirkt, bei jedem Zahn statt. Dies hat zur Folge, dass ein Ratschen bzw. ein Klick-Geräusch entsteht, wobei bei jeder Ratsch- und Klickgeräuschbewegung durch Auslenkung der Blattfeder an jedem Zahn des Zahnrades ein geringer Widerstand während der Drehbewegung erfolgt. Dieser Widerstand entsteht aufgrund der Reibung zwischen der Blattfeder und dem Zahnrad und hat eine Abnutzung des Zahnrades und der Blattfeder zur Folge.

Ebenso sind Steuerungsvorrichtungen bekannt, deren Drehknopf bei einer Schwenkbewegung einen optischen Kontakt auf der jeweiligen Seite, zu der die Schwenkbewegung hingeführt wird, bewirkt und hierdurch ein schaltungsfreies Loch geschlossen wird, das wiederum zu einer Steuerung einer Bedieneinrichtung und somit zum Bedienen einer bestimmten Funktion innerhalb der Bedieneinrichtung führt. Derartige optische Kontaktelemente sind nachteilhaft relativ komplex aufgebaut und erfordern eine kostenintensive Herstellung.

Eine Steuerungsvorrichtung mit den Merkmalen des Oberbegriffs des Anspruchs 1 ist aus der DE 89 10 606 U1 bekannt.

Es ist demzufolge Aufgabe der Erfindung, eine Fahrzeug-Steuerungsvorrichtung zum handbetätigten Bedienen von Fahrzeugeinrichtungen zur Verfügung zu stellen, die reibungsfrei und abnutzungsfrei funktioniert und kostengünstig hergestellt werden kann.

Diese Aufgabe wird gemäß einer Fahrzeug-Steuerungsvorrichtung mit dem Merkmalen des Anspruchs 1 zum handbetätigten Steuerung von Fahrzeugeinrichtungen mit mindestens einem Drehknopf und mindestens einem mit dem Drehknopf verbundenen Zahnrad, welches an einer mit dem Drehknopf gemeinsamen Drehachse drehbar gelagert ist, dadurch gelöst, dass mindestens ein einem Zahn des Zahnrades zugeordnetes Magnetelement angeordnet wird, welches gegenüber einer Drehung des Zahnrades ortsfest gelagert ist. Dies hat zur Folge, dass durch eine Drehung des Zahnrades und damit des Drehknopfes um einen Zahn bzw. eine Zahnbreite des Zahnes abwechselnd eine magnetische Kraft auf den Zahn und bei Vorliegen einer Zahnlücke ein Nicht-Wirken der magnetischen Kraft auf das Zahnrad erhalten wird. Dies ermöglicht ein Drehen des Drehknopfes und des Zahnrades in ratschenähnlicher Form gegen einen Widerstand, nämlich die magnetische Kraft, und zwar stufenartig. Eine Abnutzung von Zähnen erfolgt hierdurch jedoch nicht, da keine mechanische Berührung zwischen einer Blattfeder und den Zähnen, wie es im Stand der Technik beschrieben wird, erfolgt.

Vorteilhaft übt das Magnetelement eine magnetische Kraft in Richtung des dem Magnetelement momentan zugeordneten Zahnes in Abhängigkeit von der momentanen Drehstellung des Zahnrades aus. Somit wird abwechselnd bei der Drehung des Drehknopfes und damit des Zahnrades der erste Zahn durch die magnetische Kraft angezogen, die erste Zahnlücke durch die magnetische Kraft nicht oder nahezu nicht angezogen, der zweite Zahn angezogen, anschließend die zweite Zahnlücke nicht oder nahezu nicht angezogen usw..

Die magnetische Kraft ist derart bemessen, dass in Abhängigkeit von der momentanen Drehstellung des Zahnrades bei einer zwischen zwei Zähnen bestehenden Zahnlücke des Zahnrades zu dem Magnetelement keine oder nahezu keine magnetische Kraft auf die Zahnlücke und das Zahnrad wirkt.

Vier gegenüber einer Drehung des Zahnrades ortsfest gelagerte Magnetelemente sind gemäß einer bevorzugten Ausführungsform umfangsseitig um das Zahnrad herum mit gleichen Beabstandungen zueinander angeordnet. Dies ermöglicht in radialer Richtung betrachtet ein zeitgleiches und gleichgroßes Anziehen und Nicht-Anziehen der Zähne bzw. Zahnlücken des Zahnrades und somit das Vermeiden einer einseitigen Belastung der gesamten Konstruktion und damit des axial aufgehängten Zahnrades, wenn lediglich ein Magnetelement an einer spezifischen Position des Umfanges des Zahnrades angeordnet wäre. Gemäß der Erfindung ist das Zahnrad scheibenartig ausgebildet und mit mindestens einer sich in Radialrichtung erstreckenden schlitzartigen Durchgangsöffnung ausgestattet, durch welche mindestens ein Laserstrahl oder LED-Strahl mit einer bezüglich der Drehung des Zahnrades ortsfesten Laserstrahlquelle oder LED-Strahlquelle durchleitbar ist. Auf diese Weise ist bei der Drehung des Drehknopfes und damit des Zahnrades eine Laserstrahlunterbrechung bzw. LED-Strahiunterbrechung abwechselnd mit einer Nicht-Unterbrechung des Laserstrahles oder LED-Strahls möglich, so dass hierdurch Signale aufgrund der Unterbrechung bzw. Nicht-Unterbrechung des Laserstrahles bzw. LED-Strahls durch Einrichtungen, die mit einer Empfangseinrichtung und der Laserstrahlquelle oder LED-Strahlquelle verbunden sind, erzeugt werden können. Somit kann in Abhängigkeit von der momentanen Drehstellung des Zahnrades und damit des Drehknopfes eine bestimmte Drehstellung des Drehknopfes und damit ein gewünschtes Ansteuern einer speziellen Einrichtung festgestellt und gesteuert werden.

Dabei sind fünf sich in Radialdichtung erstreckende schlitzartige Durchgangsöffnungen auf einer gemeinsamen Kreisbahn angeordnet, wobei in Abhängigkeit von der momentanen Drehstellung des Zahnrades einer ersten der Durchgangsöffnungen ein erster Laserstrahl oder LED-Strahl mittels eines ersten Lichtleiters und einer zur ersten benachbarten zweiten der Durchgangsöffnungen ein zweiter Laserstrahl oder LED-Strahl mittels eines zweiten Lichtleiters zuordenbar ist. Hierdurch können die verschiedenen Drehstellungen in exakterer und detaillierterer Weise analysiert und signalisiert werden.

Die Laserstrahlen oder LED-Strahlen sind durch zwischen den Durchgangsöffnungen angeordnete Zwischenstücke unterbrechbar, wenn das Zahnrad eine bestimmte Drehstellung einnimmt.

Die schlitzartigen Durchgangsöffnungen in Radialrichtung weisen jeweils ein Abmaß auf, das von dem jeweils zugeordneten Laserstrahl oder LED-Strahl bei einer Drehung des Zahnrades um zwei Zahnbreiten vollständig durchlaufen wird. Hierdurch kann in Abhängigkeit von der Zahnbreite der einzelnen Zähne und somit auch in Abhängigkeit von dem ratschenähnlichen Verdrehen aufgrund des stattfindenden Widerstandes oder nicht-vorhandenen Widerstandes durch die bereits beschriebene magnetische Kraft eine bestimmte Signalisierung mittels der Laserstrahlen oder LED-Strahlen und der damit zusammenhängenden Einrichtungen bei den Empfangseinrichtungen und den Laserstrahlquellen der Laserstrahlen oder LED-Strahlquellen oder LED-Strahlen erzeugt werden.

Jeder Zahn und jede Zahnlücke weisen gemäß einer bevorzugten Ausführungsform eine sich in Umfangsrichtung erstreckende Zahnbreite bzw. Zahnlückenbreite auf, die der Breite des Magnetelementes im Bereich der Umfangsseite des Zahnrades entsprechen. Hierdurch wird erreicht, dass die magnetische Kraft eines jeden Magnetelementes gezielt auf einen Zahn wirkt oder nicht gezielt auf eine Zahnlücke wirkt, so dass eine genaue Zu- und Abnahme des Widerstandes aufgrund der vorliegenden magnetischen Kraft in Abhängigkeit von der Größe der Zähne erreicht werden kann.

Das Zahnrad und der Drehknopf können sowohl im Uhrzeigersinn als auch gegen den Uhrzeigersinn gedreht werden. Hierbei weist das Zahnrad vorzugsweise ein metallisches Material auf, um auf die magnetische Kraft der Magnetelemente wirken zu können.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:
- Fig. 1: in einer perspektivischen Darstellung die erfindungsgemäße FahrzeugSteuerungsvorrichtung in Außendarstellung gemäß einer Ausführungsform der Erfindung;
- Fig. 2: die erfindungsgemäße Fahrzeug-Steuerungsvorrichtung in einer perspektivischen Darstellung mit abgenommenem Deckel gemäß der Ausführungsform der Erfindung;
- Fig. 3a, 3b, 3c: in einer Draufsicht die Fahrzeug-Steuerungsvorrichtung gemäß der Ausführungsform der Erfindung mit verschiedenen Drehstellungen eines Zahnrades;
- Fig. 4a: in einer perspektivischen Darstellung die Fahrzeug-Steuerungsvorrichtung in einer perspektivischen offenen Darstellung mit eingezeichneten Lichtleitern;
- Fig. 4b: in einer perspektivischen Ausschnittdarstellung die erfindungsgemäße Fahrzeug-Steuerungsvorrichtung mit den Lichtleitern ohne das Zahnrad;
- Fig. 4c: in einer Draufsicht die erfindungsgemäße Fahrzeug-Steuerungsvorrichtung mit den Lichtleitern und dem Zahnrad;
- Fig. 5: in einer Querschnittsdarstellung als Ausschnittdarstellung Teile der erfindungsgemäßen Fahrzeug-Steuerungsvorrichtung mit eingebauten Lichtleitern;
- Fig. 6a-6h: verschiedene Ausschnittdarstellungen die erfindungsgemäße Fahrzeug-Steuerungsvorrichtung mit dem Zahnrad in verschiedenen Drehstellungen und den positionierten Lichtleitern; und
- Fig. 7: in einer perspektivischen offenen Querschnittsdarstellung die erfindungsgemäße Fahrzeug-Steuerungsvorrichtung mit einer Drehachse in gekippter Stellung.

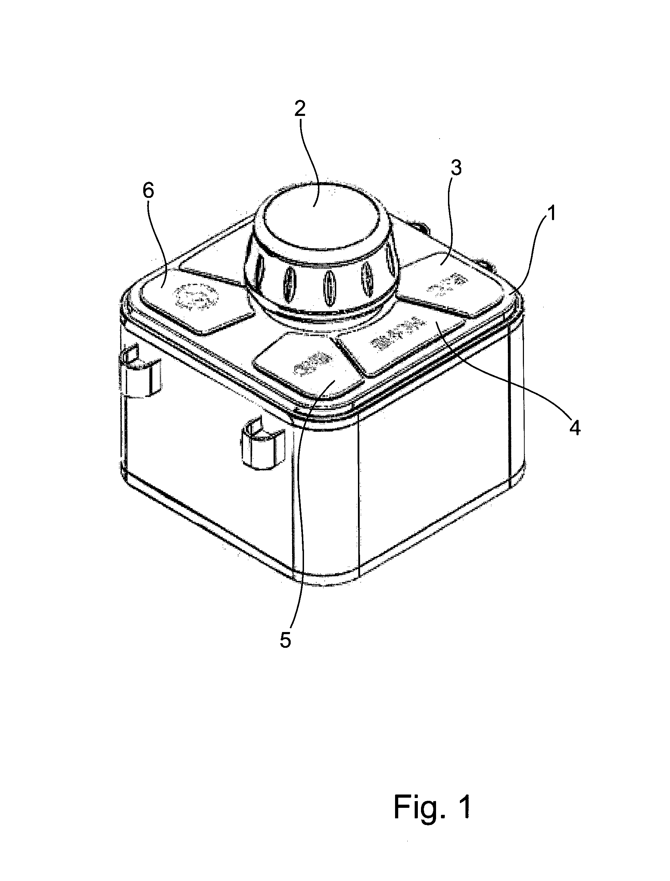

In Fig. 1 ist in einer perspektivischen Außendarstellung die erfindungsgemäße Fahrzeug-Steuerungsvorrichtung gemäß einer Ausführungsform der Erfindung wiedergegeben. Diese Steuerungsvorrichtung weist ein Gehäuse 1 zusammen mit einem oberseitig angeordneten Drehknopf 2 und verschiedenen weiteren Betätigungsknöpfen 3, 4, 5 und 6 auf, die für die Betätigung zusätzlicher Fahrzeugeinrichtungen und/oder Funktionen innerhalb des Fahrzeuges vorgesehen sind. Derartige Steuerungsvorrichtungen können beispielsweise im Mittelkonsolenbereich eines Nutzfahrzeuges oder eines Pkws eingebaut sein. Alternativ können derartige Steuerungsvorrichtungen auch in einer Armlehne eines Traktors oder eines anderen Nutzfahrzeuges integriert sein.

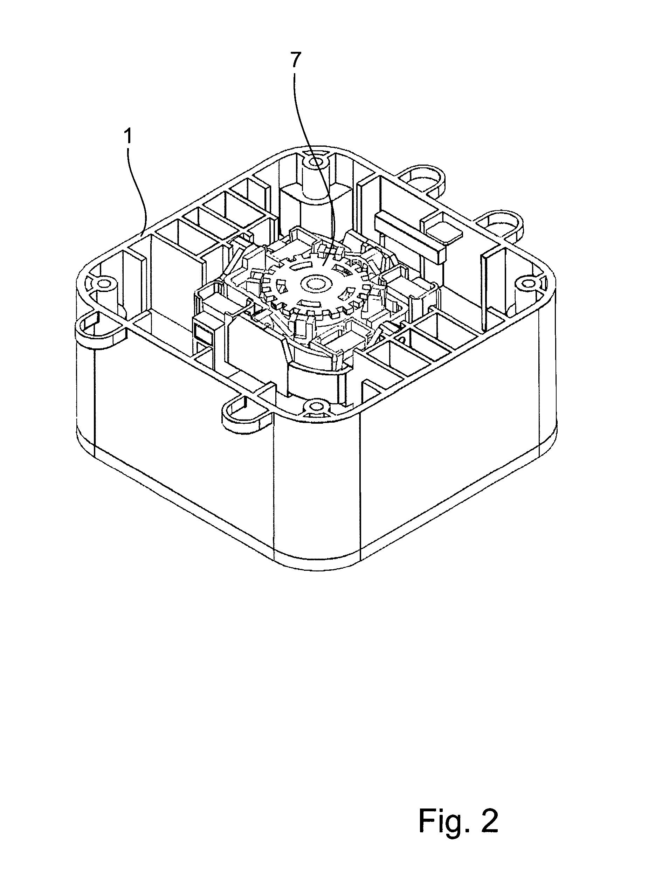

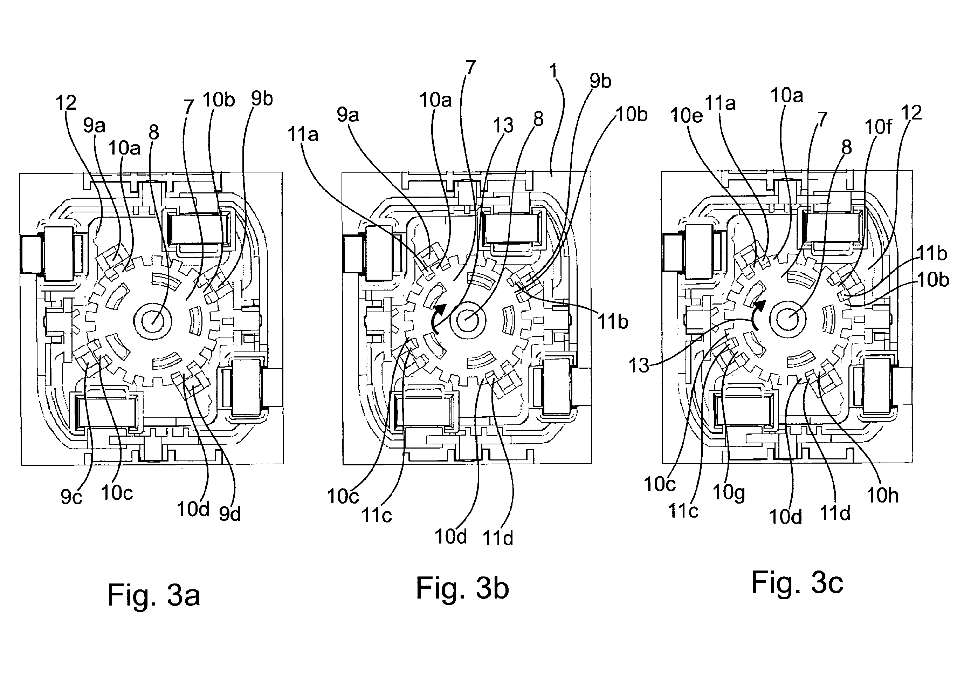

In Fig. 2 ist in einer perspektivischen offenen Darstellung die erfindungsgemäße Fahrzeug-Steuerungsvorrichtung mit Teilen des Gehäuses 1 wiedergegeben. Dieser Darstellung ist zu entnehmen, dass in einem unteren Teil des Gehäuses 1 bei abgenommenem Deckel und ohne Drehknopf 2 ein Zahnrad 7 derart gelagert ist, dass es über eine gemeinsame Drehachse 8 mit dem Drehknopf verbunden ist und bei Durchführung einer Drehbewegung des Drehknopfes 2 ebenso eine Drehung erfährt. Dies geht auch aus Fig. 3a hervor.

In Fig. 3a, 3b und 3c sind verschiedene Stellungen des Zahnrades 7 in Abhängigkeit von der getätigten Drehbewegung des Drehknopfes 2 wiedergegeben. Um das Zahnrad 7 herum sind insgesamt 4 Magnetelemente 9a, 9b, 9c und 9d angeordnet, die mit ihrer magnetischen Kraft bzw. magnetischen Wirkung mit den Zähnen 10a, 10b, 10c, 10d des Zahnrades 7 wechselwirken. Die vier Magnetelemente 9a, 9b, 9c, und 9d sind vorzugsweise im gleichen Abstand voneinander beabstandet auf einer Kreisbahn um das Zahnrad 7 herum angeordnet, also jeweils mit einem Viertelkreis voneinander beabstandet.

Das Zahnrad 7 besteht vorzugsweise aus einem magnetischen Material, wie einem Metall, um die magnetische Wechselwirkung zwischen den Magneten 9a, 9b, 9c und 9d, den Zähnen und dem Zahnrad sicherzustellen.

Das Zahnrad kann mit Hilfe der Drehachse 8, die wiederum über den Drehknopf 2 radial, wie es aus dem Pfeil 13 hervorgeht, gedreht werden.

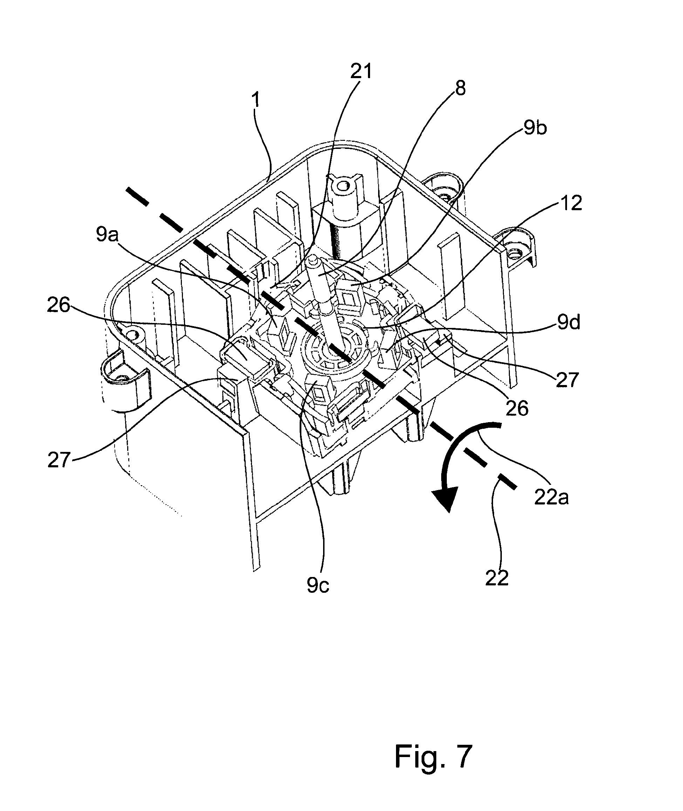

Sowohl die Drehachse 8 als auch das Zahnrad 7 und die Magnetelemente 9a-9d sind innerhalb eines schwenkbaren Bauteiles 12 angeordnet, das gegenüber dem Gehäuse 1 in verschiedene Richtungen gekippt werden kann, also in Bildebene betrachtet nach links und nach recht sowie nach oben und nach unten geschwenkt werden kann. Hierdurch werden sowohl das Zahnrad als auch der Drehknopf sowie die Drehachse 8 geschwenkt, wie es beispielhaft aus der Darstellung gemäß Fig. 7 hervorgeht.

In Fig. 3a ist der Drehknopf 2 zusammen mit dem Zahnrad 7 in einer ersten Drehstellung wiedergegeben, in der jedem Magnetelement 9a, 9b, 9c und 9d jeweils ein Zahn 10a, 10b, 10c und 10d des Zahnrades 7 zugeordnet ist. Diese Zuordnung bedeutet, dass die Zähne 10a, 10b, 10c und 10d den Magnetelementen 9a, 9b, 9c und 9d direkt gegenüberstehend positioniert sind und somit die maximal mögliche magnetische Kraftwirkung der Magnetelemente 9a, 9b, 9c und 9d auf die Zähne 10a, 10b, 10c und 10d wirkt. Vorteilhaft weisen die Magnetelemente 9a, 9b, 9c und 9d hierfür an ihrer zu dem Zahnrad 7 hingewandten Seite eine Breite auf, die der Zahnbreite eines Zahnes und auch der Breite einer Zahnlücke 11a, 11 b, 11 c und 11 d, die jeweils zwischen zwei benachbarten Zähnen angeordnet ist, entspricht.

Sobald das Zahnrad 7 gemäß Bezugszeichen 13 nach Fig. 3b weitergedreht wird, entsteht eine Position des Zahnrades 7 zusammen mit dem hier nicht näher dargestellten Drehknopf 2, bei der nun die Zähne 10a, 10b, 10c und 10d nicht mehr direkt den Magnetelementen 9a, 9b, 9c und 9d gegenüberliegen. Vielmehr liegen die Magnetelemente 9a, 9b, 9c und 9d zwischen zwei Zähnen, sind also einer Zahnlücke zwischen diesen beiden Zähnen zugeordnet. Diese Zahnlücken sind mit dem Bezugszeichen 11 a, 11 b, 11c und 11 d bezeichnet. Hierdurch wirkt eine geringe bis gar keine magnetische Kraft von Seiten der Magnetelemente 9a, 9b, 9c und 9d auf das Zahnrad 7, da die Zahnlücken einen hinreichenden Abstand zwischen dem Zahnrad 7 und den Magnetelementen bilden.

In einer weiteren Position des Zahnrades 7 gemäß Fig. 3c sind nun die nächsten Zähne 10e, 10f, 10g und 10h nach einer weiteren erfolgten Drehung gemäß Bezugszeichen 13 den Magnetelementen 9a, 9b, 9c und 9d direkt gegenübergestellt. Nun wirkt wieder die maximal mögliche magnetische Kraft auf die jeweiligen Zähne 10e, 10f, 10g und 10h und somit auf das Zahnrad 7.

Aus den Darstellungen gemäß Fig. 3a, 3b und 3c mit verschiedenen Drehpositionen bzw. Drehzuständen des Zahnrades 7 ist entnehmbar, dass bei jeder Drehbewegung des Zahnrades 7 um eine Zahnbreite weiter abwechselnd die magnetische Kraft wirkt und dann wieder nicht wirkt. Dies ermöglicht ein Drehen des Drehknopfes 2 und des Zahnrades 7 in ratschenähnlicher Form, zumindest was den gefühlten Widerstand betrifft, und zwar gegen einen gefühlten Widerstand, nämlich die magnetische Kraft. Der gefühlte Widerstand findet stufenartig aufgrund der abwechselnden Zuordnung von Zähnen und Zahnlücken zu den einzelnen Magnetelementen statt. Eine Abnutzung der Zähne erfolgt jedoch nicht, da keine mechanische Berührung zwischen Blattfedern und Zähnen, wie es aus dem Stand der Technik bekannt ist, erfolgt.

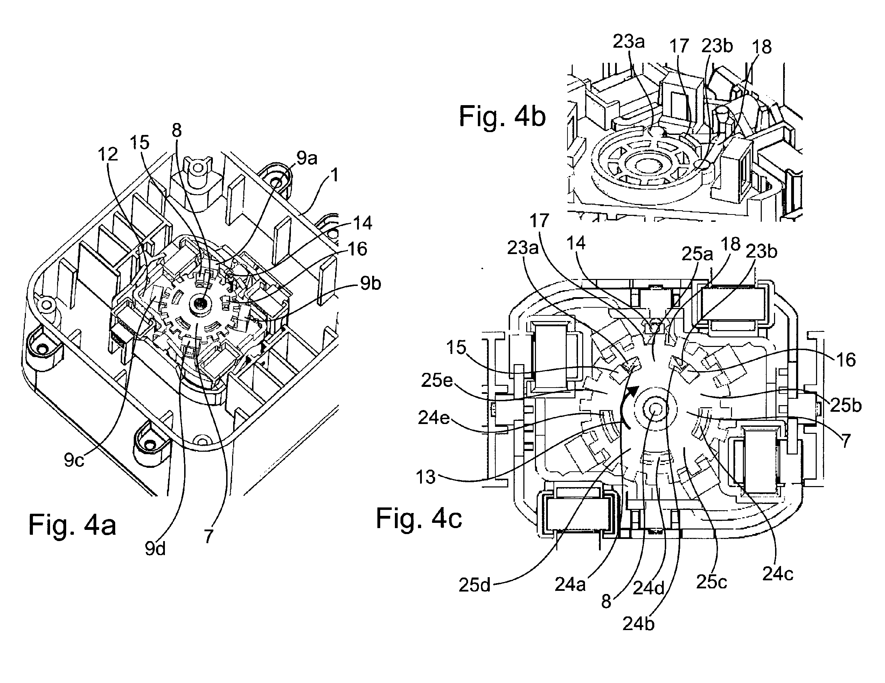

In Fig. 4a, 4b und 4c ist die Funktion eines oder mehrerer Lichtleiter zur Signalgebung bei einer bestimmten Drehstellung des Zahnrades des hier nicht näher dargestellten Drehknopfes 2 wiedergegeben.

Eine Laserstrahlquelle 14 der LED-Strahlquelle sendet über zwei Lichtleiter, die vorzugsweise aus transparentem Kunststoffmaterial und/oder Glasfasermaterial bestehen, mit dem Bezugszeichen 17 und 18 Licht aus. Das Licht wird über Empfangseinrichtungen 15, 16, die vorzugsweise oberhalb des Zahnrades angeordnet sind und die sowohl mit dem Zahnrad verbunden sein können als auch unabhängig von dem Zahnrad an einem Gehäuse befestigt sein können, empfangen.

Wie aus Fig. 4d einer Ausschnittdarstellung entnommen werden kann, wird das von der Lichtquelle 14 ausgesandte Licht über die abgezweigten Lichtleiter 17, 18, die v-förmig verlegt sind und vorzugsweise innerhalb des schwenkbaren Bauteiles 12 angeordnet sind und vorzugsweise unterhalb der Ebene des scheibenartigen Zahnrades 7 und parallel zu dieser Ebene verlaufen, weitergeleitet.

Bei der Lichtquelle 14 kann es sich beispielsweise um eine LED- und/oder eine Laserlichtquelle handeln.

An zwei Enden 23a und 23b wird das Licht aus dem Lichtleiter 17, 18 ausgekoppelt und von den Empfängern 15, 16 empfangen. Die beiden Enden 23a und 23b sind unterhalb des Zahnrades 7 angeordnet, wie es in Fig. 4c dargestellt ist und koppeln das Licht durch hierfür angeordnete Schlitze 24a, 24b, 24c, 24d und 24e des Zahnrades nach oben aus.

Das Zahnrad 7 weist in diesem Fall insgesamt fünf kreissegmentförmig angeordnete schlitzartige Durchgangsöffnungen 24a, 24b, 24c, 24d und 24e auf. Werden nun diese schlitzartigen Durchgangsöffnungen des Zahnrades 7 mittels einer Drehung des Zahnrades 7 und des hier nicht näher dargestellten Drehknopfes 2 gedreht, also um die Achse 8 gemäß dem Pfeil 13 herum bewegt, so findet zunächst eine Unterbrechung des auszukoppelnden Lichtes bzw. Lichtstrahles an dem Ende 23a statt, sofern das Zahnrad in Richtung des Pfeiles gedreht wird. Zeitgleich ist jedoch noch eine Lichtauskopplung im Bereich des Endes 23b möglich, da die diesem Ende 23b des Lichtleiters zugeordnete schlitzartige Durchgangsöffnung 24b dies noch ermöglicht. Findet eine noch weitergehende Drehung in Richtung des Pfeiles 13 statt, so wird auch an dem Ende 23b die Lichtauskopplung unterbrochen, da in diesem Bereich ein Zwischenstück 25a, welches zwischen den zwei Durchgangsöffnungen 24a und 24b liegt, den Lichtstrahl in Richtung des Empfängers 16 unterbricht. Dies ist bereits bezüglich des Empfängers 15 durch ein Zwischenstück 25e bezüglich des Lichtstrahles möglich, der aus dem Ende 23a ausgekoppelt wird. In diesem Fall wird über keines der Enden 23a und 23b Licht in Richtung der Empfänger 15, 16 gestrahlt bzw. ausgesendet, da der Lichtstrahlweg zwischen den Empfängern 15, 16 und den Enden 23a und 23b durch die Zwischenstücke 25a und 25b unterbrochen ist. Eine weitergehende Drehung um wiederum eine Zahnbreite hat zur Folge, dass erstmalig wieder eine Lichtweiterleitung und eine Lichtverbindung über das Ende 23a des Lichtleiters mittels der schlitzartigen Durchgangsöffnung 24e stattfindet.

Auf diese Weise können bezüglich der beiden Lichtauskopplungen an den Empfängern 15, 16 Lichtempfangszustände festgestellt werden, die den Zuständen 0-0, 0-1, 1-1, 1-0 hinsichtlich des Lichtauskopplungszustandes entsprechen. Hierbei entspricht 0 einer Lichtunterbrechung und 1 einem erfolgten Empfang an Licht, also einer Lichtweiterleitung ohne eine Lichtunterbrechung. Sofern die Empfänger 15, 16 mit entsprechenden hier nicht näher dargestellten elektronischen Auswerte- und Steuerungsschaltungen verbunden sind, ermöglichen diese Zustände bei entsprechender elektronischer Auswertung die Analyse, in welcher Drehstellung sich momentan das Zahnrad 7 und somit der Drehknopf 2 befindet. Dies wiederum ermöglicht, ein entsprechendes Signal zu erzeugen, welches in Abhängigkeit von der Drehstellung des Drehknopfes 2 und des Zahnrades 7 eine entsprechende Funktion in der Fahrzeugbedieneinrichtung aufrufen kann. Idealerweise sind die schlitzartigen Durchgangsöffnungen 24a, 24b, 24c, 24d und 24e mit einer bogenförmig ausgebildeten Breite versehen, die der Breite von insgesamt drei Zähnen bzw. Zahnlücken entspricht. Selbstverständlich kann bei einer entsprechend anderen Anzahl von Zähnen eine andere Bogenbreite der Durchgangsöffnungen gewählt werden. Idealerweise sind die Durchgangsöffnungen 24a-24e mit der gleichen Bogenbreite versehen, wie die dazwischen angeordneten Zwischenstücke 25a-25e.

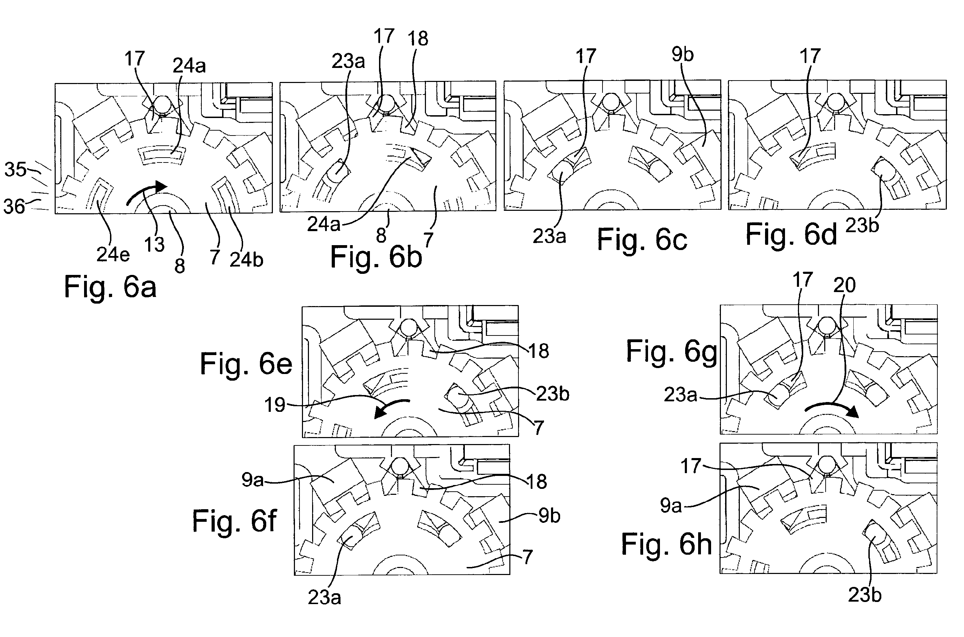

Verdeutlicht wird dies nochmals in Darstellungen gemäß Fig. 6a, 6b, 6c, 6d, 6e, 6f, 6g und 6h, in welchen ausschnittsweise das Zahnrad 7 mit verschiedenen Drehstellungen und die damit zusammenwirkenden Lichtleiter 17, 18 dargestellt sind. Beispielsweise ändert sich der Zustand gemäß Fig. 6e und 6f von 0-1 auf 1-1 bei einer Weiterdrehung des Zahnrades 7. Dies muss einer Drehung des Zahnrades 7 entgegen dem Uhrzeigersinn entsprechen, wie es durch das Bezugszeichen 19 wiedergegeben wird. Diese Drehung entgegen des Uhrzeigersinnes kann ebenso durch die nicht näher dargestellte elektronische Auswerteeinrichtung entsprechend analysiert werden.

Würde hingegen eine Drehung des Zahnrades mit dem Uhrzeigersinn gemäß Bezugszeichen 20 stattfinden, so würde gemäß Fig. 6g und 6h ein Übergang von 1-1 auf 0-1 stattfinden. Dies kann ebenso durch die Auswerteeinrichtung festgestellt werden. Ebenso kann festgestellt werden, um wieviel eine Drehung in Abhängigkeit davon erfolgt ist, ob momentan noch der Zustand 1-1 oder schon 0-1 vorliegt.

Bei Beispiel 2 gemäß Fig. 6g und 6h findet somit eine Drehung des Zahnrades 7 in Richtung des Uhrzeigersinnes statt, welche z. B. den Ablauf mit den Zuständen 0-0, 1-0, 1-1 und 0-1 aufweisen kann. Bei einem Übergang von 1-1 auf 0-1 wird durch die Auswerteeinrichtung festgestellt, dass es sich hierbei um einen Abschnitt aus dem oben dargestellten Ablauf handelt und somit um eine Drehung des Zahnrades 7 in Richtung des Uhrzeigersinnes.

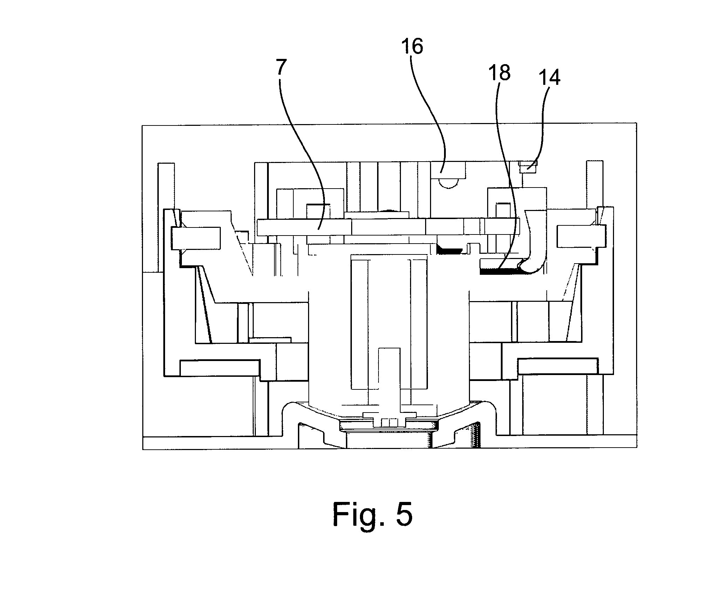

In Fig. 5 ist in einer Querschnittsdarstellung nochmals ein Ausschnitt der erfindungsgemäßen Steuereinrichtung zusammen mit den Lichtleitern wiedergegeben. Dieser Darstellung kann entnommen werden, dass die Lichtleiter 17, 18 von einer getrennt davon angeordneten Lichtquelle 14 mit Licht versorgt werden. Gemäß den eingezeichneten Pfeilen wird das Licht in den Lichtleitern 17, 18 weitergeleitet und unterhalb des Zahnrades 7 umgelenkt und ausgekoppelt. Das ausgekoppelte Licht würde dann von der Empfangseinrichtung bzw. dem Empfänger 16 empfangen werden, sofern sich aufgrund der Drehstellung des Zahnrades 7 momentan eine schlitzartige Durchgangsöffnung zwischen dem unterseitig angeordneten Ende des Lichtleiters und der Empfangseinrichtung 16 befindet. Sofern ein Zwischenstück des Zahnrades momentan in diesem Bereich angeordnet ist, würde das ausgekoppelte Licht unterbrochen werden.

In Fig. 7 ist in einer perspektivischen Ausschnittdarstellung die erfindungsgemäße Fahrzeug-Steuerungsvorrichtung in Teilen wiedergegeben. Dieser Darstellung ist zu entnehmen, dass das Bauteil 12 innerhalb des Gehäuses 1 schwenkbar angeordnet ist. In diesem Fall ist das Bauteil 12 um eine hier eingezeichnete Schwenkachse 21, die nochmals mittels einer schematisch angeordneten Achse 22 wiedergegeben wird, gemäß dem Pfeil 22a nach links unten bezüglich der Bildebene geschwenkt. Hierdurch wird sowohl die Drehachse 8 als auch das hier nicht näher dargestellte Zahnrad 7 zusammen mit den Magnetelementen 9a, 9b, 9c und 9d geschwenkt.

Durch eine derartige Schwenkbewegung des gesamten Bauteiles 12 mit den darauf angeordneten einzelnen Elementen kann erreicht werden, dass der Drehknopf zusätzlich zu seiner Drehbewegung geschwenkt werden kann, um in Zusammenwirkung von weiteren magnetischen Kräften für die Schwenkbewegung bzw. Kippbewegung des Drehknopfes dadurch eine Signalauslösung für die Bedienung einer Fahrzeugeinrichtung wiederzugeben. Das Bauteil 12 weist an zwei sich gegenüberliegenden Seiten Magnetelemente 26 auf, die jeweils einem gegenüber dem Gehäuse 1 fixierten Magnetelement 27 wechselwirken können. Wird nun das Bauteil 12 mittels einer Schwenkbewegung des Drehknopfes 2 nach unten bzw. nach links oder nach oben bzw. nach rechts geschwenkt, so erhalten die mitschwenkenden Magnetelemente 26 einen anziehenden Kontakt mit den Magnetelementen 27. Hierdurch können Kontakte geschlossen oder unterbrochen werden und daraus eine Signalwirkung erzielt werden, die in Form von weitergeleiteten Signalen mittels einer Auswerte- und Analyseeinrichtung wiederum eine Funktion innerhalb eines Navigationssystems, eines Radios oder dergleichen innerhalb des Fahrzeuges bedienen.

### Bezugszeichenliste

- 1: Gehäuse
- 2: Drehknopf
- 3: Betätigungsknopf
- 4: Betätigungsknopf
- 5: Betätigungsknopf
- 6: Betätigungsknopf
- 7: Zahnrades
- 8: Drehachse
- 9a: Magnetelement
- 9b: Magnetelement
- 9c: Magnetelement
- 9d: Magnetelement
- 10a: Zahnrad, Zahn
- 10b: Zahnrad, Zahn
- 10c: Zahnrad, Zahn
- 10d: Zahnrad, Zahn
- 10e: Zahn
- 10f: Zahn
- 10g: Zahn
- 10h: Zahn
- 11a: Zahnlücke
- 11b: Zahnlücke
- 11c: Zahnlücke
- 11d: Zahnlücke
- 12: schwenkbares Bauteil
- 13: Pfeil
- 14: Laserstrahlquelle/Lichtquelle/LED-Strahlquelle
- 15: Empfänger
- 16: Empfänger
- 17: Licht(leiter)
- 18: Licht(leiter)
- 19: Drehung entgegen des Uhrzeigersinnes
- 21: Schwenkachse
- 22: schematisch angeordnete Achse
- 22a: Pfeil nach links unten
- 23a: Ende/Lichtleiter
- 23b: Ende/Lichtleiter
- 24a: Durchgangsöffnung
- 24b: Durchgangsöffnung
- 24c: Durchgangsöffnung
- 24d: Durchgangsöffnung
- 24e: Durchgangsöffnung
- 25a: Zwischenstück
- 25b: Zwischenstück
- 25c: Zwischenstück
- 25d: Zwischenstück
- 25e: Zwischenstück
- 26: Magnetelement
- 27: Magnetelement
- 35: Zahnbreite
- 36: Zahnlückenbreite

## Patentansprüche

1. Fahrzeug-Steuerungsvorrichtung zum handbetätigten Steuern von Fahrzeugeinrichtungen mit
mindestens einem Drehknopf (2)
und mindestens einem mit dem Drehknopf (2) verbundenen Zahnrad (7), welches mit einer mit dem Drehknopf (2) gemeinsamen Drehachse (8) drehbar gelagert ist,
mit mindestens einem mindestens einem Zahn (10, 10a, 10b, 10c, 10d, 10e, 10f, 10g, 10h) des Zahnrades (7) zugeordneten Magnetelement (9a, 9b, 9c,9d), welches gegenüber einer Drehung des Zahnrades (7) ortsfest gelagert ist,
**dadurch gekennzeichnet, dass**
das Zahnrad (7) fünf sich in Radialrichtung erstreckende auf einer gemeinsamen Kreisbahn angeordnete schlitzartige Durchgangsöffnungen (24a-24e) aufweist, wobei in Abhängigkeit von der momentanen Drehstellung des Zahnrades (7) einer ersten der Durchgangsöffnungen (24a) ein erster Laserstrahl oder LED-Strahl oder mittels eines ersten Lichtleiters (17, 23a) und einer zur ersten benachbarten zweiten der Durchgangsöffnungen (24b) ein zweiter Laserstrahl mittels eines zweiten Lichtleiters (18, 23b) zuordenbar ist.

2. Fahrzeug-Steuerungsvorrichtung nach Anspruch 1,
**dadurch gekennzeichnet, dass**
das Magnetelement (9a-9d) eine magnetische Kraft in Richtung des dem Magnetelement (9a-9d) momentan zugeordneten Zahnes (10a-10h) in Abhängigkeit von der momentanen Drehstellung des Zahnrades (7) ausübt.

3. Fahrzeug-Steuerungsvorrichtung nach Anspruch 2,
**dadurch gekennzeichnet, dass**
die magnetische Kraft derart bemessen ist, dass in Abhängigkeit von der momentanen Drehstellung des Zahnrades (7) bei einer zwischen zwei Zähnen (10a-10h) bestehenden Zahnlücke (11a-11d) des Zahnrades (7) zu dem Magnetelement (9a-9d) keine oder nahezu keine magnetische Kraft auf die Zahnlücke (11a-11d) und das Zahnrad (7) wirkt.

4. Fahrzeug-Steuerungsvorrichtung nach einem der vorangegangenen Ansprüche,
**dadurch gekennzeichnet, dass**
vier gegenüber einer Drehung des Zahnrades (7) ortsfest gelagerte Magnetelemente (9a-9d) umfangsseitig um das Zahnrad (7) herum mit gleichen Beabstandungen zueinander angeordnet sind.

5. Fahrzeug-Steuerungsvorrichtung nach einem der vorangegangenen Ansprüche,
**dadurch gekennzeichnet,dass**
das Zahnrad (7) scheibenartig ausgebildet ist und durch mindestens eine schlitzartige Durchgangsöffnung (24a-24e) mindestens ein Laserstrahl oder LED-Strahl mit einer bezüglich der Drehung des Zahnrades (7) ortsfesten Laserstrahlquelle oder LED-Strahlquelle (14) durchleitbar ist.

6. Fahrzeug-Steuerungsvorrichtung nach einem der vorangegangenen Ansprüche,
**dadurch gekennzeichnet, dass**
die Laserstrahlen durch zwischen den Durchgangsöffnungen (24a-24e) angeordnete Zwischenstücke (25a-25e) unterbrechbar sind, wenn das Zahnrad (7) eine bestimmte Drehstellung einnimmt.

7. Fahrzeug-Steuerungsvorrichtung nach einem der vorangegangenen Ansprüche,
**dadurch gekennzeichnet, dass**
die schlitzartigen Durchgangsöffnungen (24a-24e) in Radialrichtung jeweils ein Abmaß aufweisen, das von dem jeweils zugeordneten Laserstrahl oder LED-Strahl bei einer Drehung des Zahnrades (7) um drei Zahnbreiten (35) vollständig durchlaufen wird.

8. Fahrzeug-Steuerungsvorrichtung nach einem der Ansprüche 3-7,
**dadurch gekennzeichnet, dass**
jeder Zahn (10a-10h) und jede Zahnlücke (11a-11d) eine sich in Umfangsrichtung erstreckende Zahnbreite (35) bzw. Zahnlückenbreite (36) aufweisen, die der Breite des Magnetelementes (9a-9d) im Bereich der Umfangsseite des Zahnrades (7) entsprechen.

9. Fahrzeug-Steuerungsvorrichtung nach einem der vorangegangenen Ansprüche,
**dadurch gekennzeichnet,dass**
das Zahnrad (7) und der Drehknopf (2) im oder gegen den Uhrzeigersinn drehbar sind.

## Claims

1. Vehicle control device for manually controlling vehicle means, with at least one rotary knob (2)
and at least one gear wheel (7) connected to the rotary knob (2) which is rotatably mounted such that it shares an axis of rotation (8) with the rotary knob (2), with at least one magnet element (9a, 9b, 9c, 9d) which is assigned to at least one tooth (10, 10a, 10b, 10c, 10d, 10e, 10f, 10g, 10h) of the gear wheel (7) and is mounted in a stationary manner towards a rotation of the gear wheel (7),
**characterised in that**
the gear wheel (7) has five slot-like through-openings (24a-24e) which extend in the radial direction and are arranged on a common circular path, wherein depending on the current rotational position of the gear wheel (7), a first laser beam or LED beam can be assigned to a first of the through-openings (24) or by means of a first optical fibre (17, 23a) and a second laser beam can be assigned to a second of the through-openings (24b) which is adjacent to the first through-opening by means of a second optical fibre (18, 23b).

2. Vehicle control device according to claim 1,
**characterised in that**
the magnet element (9a-9d) exerts a magnetic force in the direction of the tooth (10a-10h) currently assigned to the magnet element (9a-9d) depending on the current rotational position of the gear wheel (7).

3. Vehicle control device according to claim 2,
**characterised in that**
the magnetic force is calculated such that, depending on the current rotational position of the gear wheel (7), no magnetic force or almost no magnetic force acts on the tooth gap (11 a-11 d) and the gear wheel (7) when a tooth gap (11 a-11 d) is formed between two teeth (10a-10h) of the gear wheel (7) in relation to the magnet element (9a-9d).

4. Vehicle control device according to any of the preceding claims, **characterised in that** four magnet elements (9a-9d) which are mounted in a stationary manner towards a rotation of the gear wheel (7) rotates are arranged over the periphery of the gear wheel (7) at equal intervals relative to each other.

5. Vehicle control device according to any of the preceding claims, **characterised in that** the gear wheel (7) is disc-shaped and at least one laser beam or LED beam can pass through at least one slot-like through-opening (24a-24e) and has a laser beam source or LED beam source (14) which is stationary towards a rotation of the gear wheel (7).

6. Vehicle control device according to any of the preceding claims, **characterised in that**, when the gear wheel (7) is in a specific rotational position, the laser beams can be interrupted by intermediate parts (25a-25e) arranged between the through-openings (24a-24e).

7. Vehicle control device according to any of the preceding claims, **characterised in that** the slot-like through-openings (24a-24e) in the radial direction each have a dimension through which the respectively assigned laser beam or LED beam passes fully when the gear wheel (7) rotates by three tooth widths (35).

8. Vehicle control device according to any of claims 3-7,
**characterised in that**
each tooth (10a-10h) and each tooth gap (11a-11d) has a tooth width (35) and tooth gap width (36) respectively which extend in the circumferential direction and correspond to the width of the magnet element (9a-9d) in the region of the peripheral side of the gear wheel (7).

9. Vehicle control device according to any of the preceding claims, **characterised in that** the gear wheel (7) and the rotary knob (2) can be rotated clockwise or counterclockwise.

## Revendications

1. Dispositif de commande de véhicule pour la commande manuelle de dispositifs de véhicules avec
au moins un bouton rotatif (2)
et au moins une roue dentée (7) reliée au bouton rotatif (2), qui est logée de manière rotative avec un axe de rotation (8) commun au bouton rotatif (2),
avec au moins un élément magnétique (9a, 9b, 9c, 9d) correspondant à au moins une dent (10, 10a, 10b, 10c, 10d, 10e, 10f, 10g, 10h) de la roue dentée (7), qui est logé de manière fixe vis-à-vis d'une rotation de la roue dentée (7),
**caractérisé en ce que**
la roue dentée (7) comprend cinq ouvertures de passage (24a-24e) en forme de fentes, s'étendant dans la direction radiale et disposées sur une piste circulaire commune, en fonction de la position de rotation momentanée de la roue dentée (7) un premier rayon laser ou rayon LED pouvant être attribué à une première ouverture de passage (24a) ou à l'aide d'un premier guide d'onde (17, 23a) et un deuxième rayon laser pouvant être attribué à l'aide d'un deuxième guide d'onde (18, 23b) à une deuxième ouverture de passage (24b), adjacente à la première ouverture de passage.

2. Dispositif de commande de véhicule selon la revendication 1, **caractérisé en ce que** l'élément magnétique (9a-9d) exerce une force magnétique en direction de la roue (10a-10h) correspondant momentanément à l'élément magnétique (9a-9d) en fonction de la position de rotation momentanée de la roue dentée (7).

3. Dispositif de commande de véhicule selon la revendication 2, **caractérisé en ce que** la force magnétique est telle que, en fonction de la position de rotation momentanée de la roue dentée (7), dans le cas d'un entredent (11 a-11 d) existant entre deux dents (10a-10h) de la roue dentée (7), par rapport à l'élément magnétique (9a-9d), aucune ou presque aucune force magnétique n'agit sur l'entredent (11 a-11 d) et sur la roue dentée (7).

4. Dispositif de commande de véhicule selon l'une des revendications précédentes, **caractérisé en ce que** quatre éléments magnétiques (9a-9d), logés de manière fixe vis-à-vis d'une rotation de la roue dentée (7) sont disposés autour de la circonférence de la roue dentée (7) avec des intervalles réguliers entre eux.

5. Dispositif de commande de véhicule selon l'une des revendications précédentes, **caractérisé en ce que** la roue dentée (7) est conçue comme un disque et, à travers au moins une ouverture de passage (24a-24e) en forme de fente, au moins un rayon laser ou rayon LED peut passer, avec une source de rayon laser ou une source de rayon LED (14) fixe vis-à-vis de la rotation de la roue dentée (7).

6. Dispositif de commande de véhicule selon l'une des revendications précédentes, **caractérisé en ce que** les rayons laser passant par les pièces intermédiaires (25a-25e) disposées entre les ouvertures de passage (24a-24e) peuvent être interrompus lorsque la roue dentée (7) se met dans une position de rotation déterminée.

7. Dispositif de commande de véhicule selon l'une des revendications précédentes, **caractérisé en ce que** les ouvertures de passage (24a-24e) en forme de fentes présentent chacune, dans la direction radiale, une dimension qui est entièrement traversée par le rayon laser ou rayon LED correspondant lors d'une rotation de la roue dentée (7) de trois largeurs de dent (35).

8. Dispositif de commande de véhicule selon l'une des revendications 3 à 7, **caractérisé en ce que** chaque dent (10a-10h) et chaque entredent (11a-11d) présentent respectivement une largeur de dent (35) et une largeur d'entredent (36) s'étendant dans la direction de la circonférence et qui correspondent à la largeur de l'élément magnétique (9a-9d) au niveau de la circonférence de la roue dentée (7).

9. Dispositif de commande de véhicule selon l'une des revendications précédentes, **caractérisé en ce que** la roue dentée (7) et le bouton rotatif (2) peuvent être tournés dans le sens des aiguilles d'une montre ou dans le sens contraire aux aiguilles d'une montre.
